# EUROPEAN PATENT APPLICATION

(11) **EP 4 488 882 A1**
(43) Date of publication of application: **08.01.2025**
(21) Application number: 23765982.6
(22) Date of filing: 07.03.2023
(51) Int. Cl.: G06N 3/08, G06N 5/04

(54) **MODEL ACCURACY DETERMINATION METHOD AND APPARATUS, AND NETWORK-SIDE DEVICE**

(30) Priority: 07.03.2022 CN 202210225777
(71) Applicant: VIVO MOBILE COMMUNICATION CO., LTD., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Murgitroyd & Company
(86) International application number: PCT/CN2023/080030
(87) International publication number: WO 2023/169404

(57) **Abstract**

This application discloses a method and an apparatus for determining model accuracy, and a network-side device, and belongs to the field of mobile communication. The method for determining model accuracy in embodiments of this application includes: the first network element determines first accuracy of a first model, where the first accuracy indicates an accuracy of a result of inference performed on a task by using the first model; and sends first information to a second network element in a case that the first network element determines that the first accuracy meets a preset condition, where the first information indicates that accuracy of the first model does not meet an accuracy requirement or degrades.

## Description

### CROSS-REFERENCE TO RELATED APPLICATION

The present invention claims priority to Chinese Patent Application No. 202210225777.2, filed with the China National Intellectual Property Administration on March 7, 2022 and entitled "METHOD AND APPARATUS FOR DETERMINING MODEL ACCURACY, AND NETWORK-SIDE DEVICE", which is incorporated herein by reference in its entirety.

### TECHNICAL FIELD

This application belongs to the field of mobile communication technologies, and specifically, to a method and an apparatus for determining model accuracy, and a network-side device.

### BACKGROUND

In a communication network, some network elements are introduced for intelligent data analysis, and some data analysis results (analytics) (or referred to as inference data results) of tasks are generated. The data analysis results can assist devices in and out of the network in policy decision-making. In this way, intelligent policy decision-making of the devices is improved by using an artificial intelligence (artificial intelligence, AI) method.

A network data analytics function (network data analytics function, NWDAF) may perform AI or machine learning (machine learning, ML) model training based on training data, to obtain a corresponding model suitable for a specific AI task. Inference is performed on inference input data of the specific AI task based on an AI/ML model, to obtain inference result data corresponding to the specific AI task. A policy control function (policy control function, PCF) entity performs intelligent policy control and charging (policy control and charging, PCC) based on inference result data, for example, formulates an intelligent user camping policy based on inference result data of user service behavior, to improve service experience of a user. Alternatively, an access and mobility management function (access and mobility management function, AMF) performs an intelligent mobility management operation based on inference result data of a specific AI task, for example, intelligently pages a user based on inference result data of a movement track of a user, to improve paging reachability.

The devices in and out of the network make correct and optimized policy decisions based on AI data analysis results as long as the data analysis results are correct. If accuracy of the data analysis result is low, and the data analysis result is provided as incorrect information to the devices in and out of the network for reference, a wrong policy decision is made or an inappropriate operation is performed. Therefore, it is necessary to ensure the accuracy of the data analysis result.

Although accuracy in training (accuracy in training, AiT) of the model in a training phase meets an accuracy requirement for the model, whether inference accuracy (accuracy in use, AiU) of the model can meet an accuracy requirement when the model is put into use cannot be determined. A gap may exist due to different data distributions, a low generalization capability of the model, and the like. As a result, the accuracy of the inference result data obtained by using the model is low. When the inference result data is provided to the devices in and out of the network for reference, it is likely that wrong policy decisions are made or inappropriate operations are performed.

### SUMMARY

Embodiments of this application provide a method and an apparatus for determining model accuracy, and a network-side device, which can resolve a problem that accuracy of inference result data obtained by a model is low.

According to a first aspect, a method for determining model accuracy is provided and applied to a first network element. The method includes:
the first network element determines first accuracy of a first model, where the first accuracy indicates an accuracy of a result of inference performed on a task by using the first model; and
the first network element sends first information to a second network element in a case that the first network element determines that the first accuracy meets a preset condition, where the first information indicates that accuracy of the first model does not meet an accuracy requirement or degrades, where
the first network element is a network element providing the first model, and the second network element is a network element that performs inference on the task.

According to a second aspect, an apparatus for determining model accuracy is provided, including:
an execution module, configured to determine first accuracy of a first model, where the first accuracy indicates an accuracy of a result of inference performed on a task by using the first model; and
a transmission module, configured to send first information to a second network element in a case that where it is determined that the first accuracy meets a preset condition, where the first information indicates that accuracy of the first model does not meet an accuracy requirement or degrades, where
the apparatus for determining model accuracy is a network element providing the first model, and the second network element is a network element that performs inference on the task.

According to a third aspect, a method for determining model accuracy is provided and applied to a second network element. The method includes:
a second network element performs inference on a task based on a first model, and sends second information to a first network element, where the second information indicates that the first model is already used for inference of the task; and
the second network element receives first information from the first network element, where the first information indicates that accuracy of the first model does not meet an accuracy requirement or degrades.

According to a fourth aspect, an apparatus for determining model accuracy is provided, including:
an inference module, configured to perform inference on a task based on a first model, and send second information to a first network element, where the second information indicates that the first model is already used for inference of the task; and
a transceiver module, configured to receive first information from the first network element, where the first information indicates that accuracy of the first model does not meet an accuracy requirement or degrades.

According to a fifth aspect, a method for determining model accuracy is provided and applied to a third network element. The method includes:
the third network element sends task request information to a second network element, where the task request information is used for requesting to perform inference on a task; and
the third network element receives fourth information from the second network element, where the fourth information indicates that accuracy of a first model does not meet an accuracy requirement or degrades; and
the first model is a model that is provided by a first network element for inference of the task, and the first network element determines that the accuracy of the first model does not meet the accuracy requirement or degrades.

According to a sixth aspect, an apparatus for determining model accuracy is provided, including:
a sending module, configured to send task request information to a second network element, where the task request information is used for requesting to perform inference on a task; and
a receiving module, configured to receive fourth information from the second network element, where the fourth information indicates that accuracy of a first model does not meet an accuracy requirement or degrades, where
the first model is a model that is provided by a first network element for inference of the task, and the first network element determines that the accuracy of the first model does not meet the accuracy requirement or degrades.

According to a seventh aspect, a network-side device is provided. The network-side device includes a processor and a memory. The memory stores a program or an instruction that can be run on the processor, and when the program or the instruction is executed by the processor, the steps of the method according to the first aspect are implemented, the steps of the method according to the third aspect are implemented, or the steps of the method according to the fifth aspect are implemented.

According to an eighth aspect, a system for determining model accuracy is provided, including: a network-side device, where the network-side device includes a first network element, a second network element, and a third network element, the first network element may be configured to perform the operations of the method for determining model accuracy as described above, the second network element may be configured to perform the operations of the method for determining model accuracy as described above, and the third network element may be configured to perform the operations of the determining model accuracy method as described above.

According to a ninth aspect, a readable storage medium is provided. The readable storage medium stores a program or an instruction. When the program or the instruction is executed by a processor, the steps of the method according to the first aspect are implemented, the steps of the method according to the third aspect are implemented, or the steps of the method according to the fifth aspect are implemented.

According to a tenth aspect, a chip is provided. The chip includes a processor and a communication interface. The communication interface is coupled to the processor. The processor is configured to run a program or an instruction to implement the method in the first aspect, or implement the method in the third aspect, or implement the method in the fifth aspect.

According to an eleventh aspect, a computer program/program product is provided. The computer program/program product is stored in a storage medium. The computer program/program product is executed by at least one processor to implement the method in the first aspect, or implement the method in the third aspect, or implement the method in the fifth aspect.

In embodiments of this application, a first network element determines first accuracy of a first model, where the first accuracy indicates an accuracy of a result of inference performed on a task by using the first model. The first information is sent to a second network element in a case that the first network element determines that the first accuracy meets the preset condition, where the first information indicates that the accuracy of the first model does not meet an accuracy requirement or degrades, so that the accuracy of the model in an actual application process can be monitored, and when the accuracy degrades, corresponding measures can be taken in time to prevent wrong policy decision-making or an inappropriate operation.

### BRIEF DESCRIPTION OF THE DRAWINGS

FIG. 1 is a diagram of a structure of a wireless communication system applicable to an embodiment of this application;
FIG. 2 is a flowchart diagram of a method for determining model accuracy according to an embodiment of this application;
FIG. 3 is a diagram of another flowchart of a method for determining model accuracy according to an embodiment of this application;
FIG. 4 is a diagram of another flowchart of a method for determining model accuracy according to an embodiment of this application;
FIG. 5 is a diagram of another flowchart of a method for determining model accuracy according to an embodiment of this application;
FIG. 6 is a diagram of a structure of an apparatus for determining model accuracy according to an embodiment of this application;
FIG. 7 is a diagram of another flowchart of a method for determining model accuracy according to an embodiment of this application;
FIG. 8 is a diagram of another structure of an apparatus for determining model accuracy according to an embodiment of this application;
FIG. 9 is a diagram of another flowchart of a method for determining model accuracy according to an embodiment of this application;
FIG. 10 is a diagram of another structure of an apparatus for determining model accuracy according to an embodiment of this application;
FIG. 11 is a diagram of a structure of a communication device according to an embodiment of this application; and
FIG. 12 is a diagram of a structure of a network-side device that implements an embodiment of this application.

### DETAILED DESCRIPTION

Technical solutions in embodiments of this application are clearly described in the following with reference to accompanying drawings in embodiments of this application. It is clear that the described embodiments are merely some rather than all of embodiments of this application. All other embodiments obtained by a person skilled in the art based on embodiments of this application fall within the protection scope of this application.

In the specification and claims of this application, terms such as "first" and "second" are used to distinguish similar objects, but are not used to describe a specific sequence or order. It should be understood that terms used in this way are exchangeable in a proper case, so that embodiments of this application can be implemented in an order different from the order shown or described herein. In addition, objects distinguished by using "first" and "second" are usually of a same type, and the terms do not limit a quantity of the objects. For example, a first object can be one object or more objects. In addition, "and/or" used in this specification and the claims represents at least one of connected objects. The character "/" usually indicates an "or" relationship between associated objects.

It should be noted that technologies described in embodiments of this application are not limited to a long term evolution (long term evolution, LTE) system/an LTE-Advanced (LTE-Advanced, LTE-A) system, and may also be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), and single-carrier frequency division multiple access (single-carrier frequency division multiple access, SC-FDMA). Terms "system" and "network" in embodiments of the application are often used interchangeably. The described technologies can be applied to the foregoing systems and radio technologies, and can also be applied to other systems and radio technologies. The following describe a 5th generation mobile communication technology (5th generation mobile communication technology, 5G) system for an example purpose, and 5G terms are used in most of the following descriptions, but the technologies may also be applied to applications other than the 5G system application, for example, a 6th generation (6th generation, 6G) communication system.

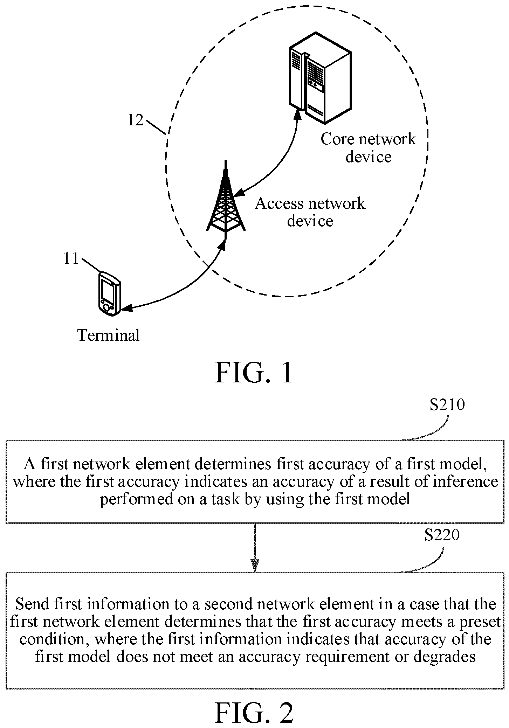

FIG. 1 is a block diagram of a wireless communication system applicable to an embodiment of this application. The wireless communication system includes a terminal 11 and a network-side device 12. The terminal 11 may be a terminal-side device like a mobile phone, a tablet personal computer (tablet personal computer), a laptop computer (laptop computer), which is also referred to as notebook computer, a personal digital assistant (personal digital assistant, PDA), a palmtop computer, a netbook, an ultra-mobile personal computer (ultra-mobile personal computer, UMPC), a mobile internet device (mobile internet device, MID), an augmented reality (augmented reality, AR)/virtual reality (virtual reality, VR) device, a robot, a wearable device (wearable device), vehicular user equipment (VUE), pedestrian user equipment (PUE), a smart home (a home device with a wireless communication function, for example, a refrigerator, a television, a washing machine, or furniture), a games console, a personal computer (personal computer, PC), a teller machine, and a self-service machine. The wearable device includes: a smart watch, a smart band, a smart headphone, smart glasses, a smart jewelry (a smart bangle, a smart bracelet, a smart ring, a smart necklace, a smart anklet, a smart ankle bracelet, and the like), a smart wristband, a smart cloth, and the like. It should be noted that a specific type of the terminal 11 is not limited in this embodiment of this application. The network-side device 12 may include an access network device or a core network device. The access network device 12 may also be referred to as a radio access network device, a radio access network (radio access network, RAN), a radio access network function, or a radio access network unit. The access network device 12 may include a base station, a wireless local area network (wireless local area network, WLAN) access point, a wireless fidelity (wireless fidelity, Wi-Fi) node, or the like. The base station may be referred to as a NodeB, an evolved NodeB (evolved nodeB, eNB), an access point, a base transceiver station (base transceiver station, BTS), a radio base station, a radio transceiver, a basic service set (basic service set, BSS), an extended service set (extended service set, ESS), a home B Node, a home evolved B Node, a transmitting receiving point (transmitting receiving point, TRP), or another proper term in the art. The base station is not limited to a particular technical vocabulary as long as the same technical effect is achieved. It should be noted that only a base station in the 5G system is used as an example in embodiments of this application, but a specific type of the base station is not limited. The core network device may include, but is not limited to, at least one of the following: a core network node, a core network function, a mobility management entity (mobility management entity, MME), an access and mobility management function (access and mobility management function, AMF), a session management function (session management function, SMF), a user plane function (user plane function, UPF), a policy control function (policy control function, PCF), a policy and charging rules function (policy and charging rules function, PCRF), an edge application server discovery function (edge application server discovery function, EASDF), a unified data management (unified data management, UDM), a unified data repository (unified data repository, UDR), a home subscriber server (home subscriber server, HSS), a centralized network configuration (centralized network configuration, CNC), a network repository function (network repository function, NRF), a network exposure function (network exposure function, NEF), a local NEF (local NEF or L-NEF), a binding support function (binding support function, BSF), an application function (application function, AF), and the like. It should be noted that in embodiments of this application, only a core network device in the 5G system is used as an example for description, and a specific type of the core network device is not limited.

The following describes in detail, with reference to the accompanying drawings, a method and an apparatus for determining model accuracy and a network-side device provided in embodiments of this application by using some embodiments and application scenarios thereof.

As shown in FIG. 2, an embodiment of this application provides a method for determining model accuracy. An execution entity of the method includes a first network element. The first network element includes a model training function network element. In other words, the method may be performed by software or hardware installed on the first network element. The method includes the following steps.

S210: The first network element determines first accuracy of a first model, where the first accuracy indicates an accuracy of a result of inference performed on a task by using the first model, and the first network element is a network element providing the first model.

In an implementation, the first network element may be a network element having both a model inference function and a model training function. For example, the first network element is an NWDAF, and the NWDAF may include an analytics logical function (analytics logical function, AnLF) network element, and a model training logical function (model training logical function, MTLF) network element.

In another implementation, the first network element includes a model training function network element, and a second network element includes a model inference function network element. For example, the first network element is the MTLF, and the second network element is the AnLF.

If the NWDAF is the first network element, the second network element and the first network element are a same network element in the following embodiments. In other words, the MTLF and the AnLF are combined into the NWDAF.

It should be understood that the first model may be constructed and trained based on an actual requirement, for example, an AI/ML model. Training data is collected by the MTLF, and model training is performed based on the training data. After training is completed, the MTLF sends information about a trained first model to the AnLF.

After determining a triggered task, the AnLF performs inference on the task based on the first model, to obtain inference result data.

It should be understood that the task is a data analysis task and is used to indicate a task type rather than a single task. After triggering the task, the AnLF may determine a first model corresponding to the task based on identification information (analytics ID) of the task, and then perform inference on the task based on the corresponding first model, to obtain inference result data. For example, if an analytics ID of the task is UE mobility, the task is used for predicting a movement track of a terminal (also referred to as user equipment (user equipment, UE)). In this case, the AnLF may perform inference on the task based on a first model corresponding to UE mobility, and obtained inference result data is predicted terminal location (UE location) information.

The AnLF may perform one or more inferences on the task based on the first model, to obtain a plurality of pieces of inference result data or inference result data including a plurality of output result values.

It should be understood that inference performed on the task by the AnLF may be triggered by a third network element sending a task request message. The third network element is a network element that triggers the task. The third network element includes a consumer network function (consumer network function, consumer NF). The consumer NF may be a 5G network element, an application function (application function, AF), a terminal, or the like. Alternatively, the task may be actively triggered by the AnLF. For example, a phase of validation and measurement is set. In the phase of validation and measurement, the triggered task is actively simulated by the AnLF for measuring the accuracy of the first model.

For brevity, in the following embodiments, examples in which the MTLF is the first network element, the AnLF is the second network element, and the consumer NF is the third network element are used for description.

In a case that it is determined that the first network element is configured to perform task inference, the MTLF calculates the first accuracy corresponding to the first model in the inference process, and the first accuracy is an AiU. There may be various manners of calculating the first accuracy, and only a specific implementation is provided in embodiments of this application. The step S210 includes:
the first network element obtains first data of the task; and
the first network element calculates the first accuracy of the first model based on the first data, where
the first data includes at least one of the following:
   inference input data corresponding to the task;
   inference result data corresponding to the task; and
   label data corresponding to the task.

Specifically, a quantity of correct results in the inference result data may be determined by comparing the inference result data with the corresponding label data, and the quantity of correct results divided by a total number of times is used as the first accuracy. A formula is expressed as follows.

The first accuracy is equal to the quantity of correct results/the total number of times.

Herein, the correct result may indicate that inference result data is consistent with label data, or that a difference between the inference result data and the label result data is within an allowable range.

There may be various expression forms of the first accuracy. The expression form is not limited to a specific percentage value, for example, 90%, or may be a classification expression form, for example, high, medium, low, or the like, or may be normalized data, for example, 0.9.

In an implementation, that the first network element obtains first data of the task includes:
the first network element determines a source device of the first data; and
the first network element obtains the first data from the source device.

A source device of the label data may be determined by the MTLF based on the first model and task-related information.

S220: First information is sent to a second network element in a case that the first network element determines that the first accuracy meets a preset condition, where the first information indicates that accuracy of the first model does not meet an accuracy requirement or degrades, and
the second network element is a network element that performs inference on the task.

The MTLF determines, based on whether the first accuracy meets the preset condition, whether the accuracy of the first model meets the accuracy requirement or degrades. The preset condition may include that the first accuracy is less than a preset threshold or a degrade amplitude reaches a specific degree.

When determining that the accuracy of the first model does not meet the accuracy requirement or degrades, the MTLF sends the first information to the AnLF, to indicate the AnLF that the accuracy of the first model does not meet the accuracy requirement or degrades, so that the AnLF performs a corresponding operation based on the first information. For example, information indicating that the accuracy of the first model does not meet the accuracy requirement or degrades may be sent to the consumer NF.

It can be learned from the technical solution in the foregoing embodiment that, in this embodiment of this application, the first accuracy of the first model is determined by the first network element, where the first accuracy indicates an accuracy of a result of inference performed on the task by using the first model. The first information is sent to the second network element in the case where the first network element determines that the first accuracy meets the preset condition, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

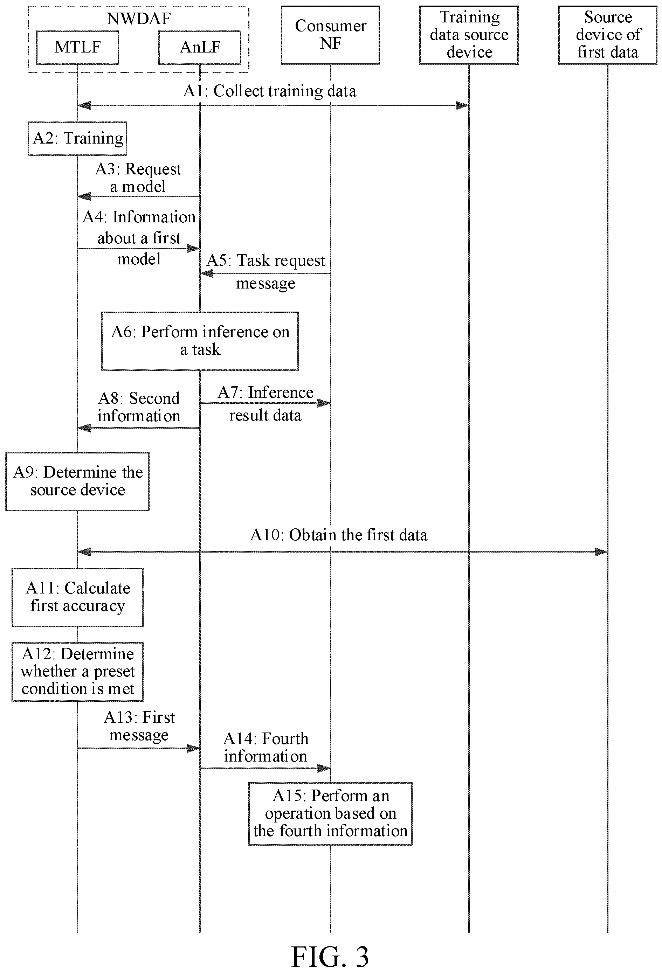

Based on the foregoing embodiments, as shown in FIG. 3, the method for determining model accuracy further includes the following steps.

The first model is pretrained by the MTLF and provided to the AnLF. A process of training the first model by the MTLF may include steps A1 and A2.

Step A1: The MTLF collects training data from a training data source device.

Step A2: The MTLF trains the first model based on the training data.

In an implementation, after the MTLF completes training of the first model, the MTLF may perform step A4 of sending information about the trained first model to the AnLF. The information about the first model may be specifically sent by using an Nnwdaf_ MLModelProvision_Notify message or an Nnwdaf_MLModelInfo_Response message.

In an implementation, before step A4, the method further includes:
step A3: The AnLF sends a model request message to the MTLF.

In an implementation, in the training phase of the first model in step A2 or post-training test phase, the MTLF needs to evaluate the accuracy of the first model and calculate second accuracy of the first model, that is, an AiT. The second accuracy may be obtained according to the same calculation formula for the first accuracy. Specifically, the MTLF may set a verification dataset for evaluating the second accuracy of the first model. The verification dataset includes input data of the first model and corresponding label data. The MTLF inputs the input data to the trained first model to obtain output data to determine whether the output data is consistent with the label data through comparing, and then calculates the second accuracy of the first model according to the foregoing formula.

Correspondingly, in an implementation, when sending the information of the first model to the AnLF in step A4, the MTLF may also send the second accuracy of the first model simultaneously, or send the second accuracy of the first model to the AnLF by using an independent message.

In an implementation, if the task is actively triggered by the AnLF, the AnLF may perform step A6 after triggering the task.

Step A6: The AnLF performs inference on the task based on the received first model to obtain the inference result data.

In another implementation, if the task is triggered by the consumer NF, before step A6, the method further includes step A5.

Step A5: The consumer NF sends a task request message to the AnLF, where the task request message includes description information of the task, and is used for triggering the AnLF to perform inference on the task based on the first model corresponding to the task. The task request message may be specifically sent by using an Nnwdaf_AnalyticsSubscription_Subscribe message or an Nnwdaf_AnalyticsInfo_Request message.

The description information of the task may include various types of information, and may include identification information of the task, filter information (analytics filter information) of the task, target information (analytics target) of the task, and the like. A target, a range, and the like related to the task may be determined based on the description information of the task.

The inference input data used for inference of the task in step A6 may be obtained from a source device of the inference input data. Specifically, the source device from which the inference input data corresponding to the task is obtained may be determined based on the task request message received in step A5. An inference input data request message is sent to the source device of the inference input data to obtain the inference input data, and inference is performed on the inference input data based on the first model to obtain the inference result data. The inference input data request message may be specifically sent by using an Nnwdaf_AnalyticsSubscription_Subscribe message or an Nnwdaf_AnalyticsInfo_Request message.

For example, based on the first model corresponding to analytics ID=UE mobility, the AnLF performs inference on the inference input data corresponding to the task, for example, values such as a UE ID, a time, and a current UE service status, to obtain the inference result data, that is output data of the UE location.

In an implementation, step A5 may be before step A3. That is, the AnLF first receives the task request message from the consumer NF, determines the first model corresponding to the task based on the task request message, and then sends a model request to the MTLF providing the first model.

For the first model corresponding to the task, a first model used for the task may be determined based on a task type indicated by an analytics ID in the task request message, or may be determined based on a mapping relationship between an analytics ID and a first model. The first model may be represented by model identification information (model ID) of the model, for example, a model 1.

In another implementation, the steps A1 to A4 may all be after step A5. That is, after receiving the model request message sent by the AnLF, the MTLF trains the first model corresponding to the task, and sends the message of the trained first model to the AnLF.

In an implementation, in a case that the task is triggered by the third network element by using the task request message, after step A6, the method further includes the following steps.

Step A7: The AnLF sends the inference result data obtained through inference to the consumer NF, where the inference result data may be used for informing the consumer NF of a statistical or predicted value obtained through inference performed by using the first model corresponding to the analytics ID, to assist the consumer NF in corresponding policy decision-making. The inference result data may be specifically sent by using an Nnwdaf_AnalyticsSubscription_Notify message or an Nnwdaf_AnalyticsInfo_Response message.

Before step S210, the method further includes:
step A8: The first network element receives second information from the second network element, where the second information indicates that the first model is already used for inference of the task. In other words, after the AnLF performs inference on the task based on the first model, the AnLF sends the second information to the MTLF.

The second information includes at least one of the following:
the identification information of the first model, for example, a model ID, which is used for specifying a first model for use;
the identification information of the task, for example, an analytics ID, which is used for finding a first model corresponding to the analytics ID;
the filter information of the task, which is used for defining a range for execution of the task, including a time range, a region range, and the like;
the target information of the task, which indicates a target of the task, where the target of the task may be a specific terminal (also referred to as user equipment (user equipment, UE)), for example, a target terminal (target UE), or may be a specific network function instance (network function instance, NF instance);
the inference input data corresponding to the task; and
the inference result data corresponding to the task.

In an implementation, step S210 includes steps A9 to A11.

Step A9: The MTLF determines the source device of the first data.

In an implementation, the source device providing the first data is determined based on at least one piece of the following information:
identification information (model ID) of the first model, for example, the model 1;
identification information of the task;
filter information of the task; and
target information of the task.

In an implementation, the MTLF may determine at least one piece of the following information based on the foregoing information:
the first model corresponding to the task; type information of the input data of the first model;
type information of the output data of the first model;
information about a first source device, where the first source device is the source device of the inference input data corresponding to the task; and
information about a second source device, where the second source device is a source device of the label data corresponding to the task.

The first model corresponding to the task may determine the first model used for the task based on the task type indicated by the analytics ID in the task request message, or based on the mapping relationship between an analytics ID and a first model.

The type information of the input data of the first model may also be referred to as metadata information, and may specifically include a terminal identifier (UE ID), a time, a current terminal service status, and the like corresponding to the input data.

The type information of the output data of the first model includes a data type (data type), and for example, indicates a tracking area (tracking area, TA) or a cell (cell) of a UE location.

For the first source device, specifically, the AnLF determines, based on the information such as analytics filter information and analytics target in the task request message, the target and the range related to the task, and then determines, based on the target, the range, and metadata information, the network element from which the inference input data corresponding to the task can be obtained as the source device of the inference input data corresponding to the task.

For the second source device, specifically, the AnLF determines, based on the type information of the output data of the first model, a network element device type (an NF type) that can provide the output data; determines, based on the filter information of the task, the target information, and the like, a specific network element instance (instance) corresponding to the network element device type; and uses the network element instance as the source device of the label data. For example, based on a data type, namely, a UE location, of the output data of the first model corresponding to a task, namely, UE mobility, the AnLF determines that data of the UE location may be provided by a network element device type, namely, an AMF type. Then, the AnLF queries a unified data management (unified data management, UDM) entity or a network repository function (network repository function, NRF) based on filter information like AOI of the task and a target UE 1 of the task, and obtains that a corresponding AMF instance is an AMF 1. In this way, the AnLF uses the AMF 1 as a source device of label data, and subsequently obtains the label data of the UE location from the AMF 1.

Step A10: The MTLF obtains the first data.

In an implementation, that the MTLF may obtain the first data from the source device of the first data may specifically include:
the first network element obtains the inference input data corresponding to the task from the first source device, that is, the MTLF collects the inference input data by sending the inference input data request message to the first source device.

The first network element obtains the label data corresponding to the task from the second source device, that is, the MTLF collects the label data by sending a label data request message to the second source device. The label data request message may carry type information of the label data, target information corresponding to the label data, time information (for example, a timestamp and a time period), and the like for determining which piece of label data is fed back to the source device of the label data.

The type information of the label data, the target information corresponding to the label data, the time information, and the like in the label data request message may be determined by the MTLF based on the type information of the output data of the first model, the target information of the task, the filter information of the task, and the like respectively. Specifically, the MTLF determines, based on the type information of the output data of the first model, the type information of the label data that needs to be obtained; the MTLF determines, based on the target information of the task, the target information of the label data that needs to be obtained; and if the MTLF determines, based on the filter information of the task, that an inference process of the task is statistical calculation made for a specific time in the past or prediction made for a specific time in the future, the MTLF further needs to obtain label data corresponding to the specific time in the past or the specific time in the future.

For example, the MTLF sends the label data request message to an AMF or a location management function (location management function, LMF), where the label data request message carries the data type, namely, the UE location, the target information, namely, a UE 1, and the time information, namely, a specific time period that correspond to the label data, and is used for requesting the AMF/LMF to feed back data of the UE location of the UE 1 within the specific time period.

It should be understood that if the AnLF obtains a plurality of pieces of inference result data by performing the inference process one or more times in step A6, the MTLF correspondingly needs to obtain a plurality of pieces of label data corresponding to the plurality of pieces of inference result data.

In another implementation, all or part of the first data may alternatively be carried by the second message. For example, the second message may include the inference input data and/or the inference result data of the task.

Step A11: The first accuracy of the first model is calculated based on the inference result data and the label data.

In an implementation, as shown in FIG. 3, the step S220 includes steps A12 and A13.

Step A12: The AnLF determines whether the first accuracy meets the preset condition, and performs step A13 in a case that the first accuracy meets the AnLF.

The preset condition may be set based on an actual requirement. In an implementation, the preset condition includes at least one of the following conditions:
the first accuracy is less than a first threshold;
the first accuracy is less than the second accuracy; and
the first accuracy is less than the second accuracy, and a difference between the first accuracy and the second accuracy is greater than a second threshold.

Step A13: The MTLF sends the first information to the AnLF, where the first information is used for notifying the AnLF that the accuracy of the first model does not meet the accuracy requirement or degrades.

In an implementation, the first information includes at least one piece of the following information:
all or part of the description information of the task, which indicates the task for inference based on the first model, may specifically include the analytics ID, the analytics filter information, the analytics target, and the like;
information indicating that the accuracy of the first model does not meet the accuracy requirement or degrades;
first accuracy;
first recommended operation information, used for recommending a subsequent operation to the AnLF; and
first waiting time information, where the first waiting time information indicates time required for retraining the first model.

In an implementation, the first recommended operation information includes at least one of the following:
continuing using the first model, that is, indicating that the AnLF can continue using the first model for inference of the task;
stopping using the first model, that is, indicating the AnLF to stop using the first model; and
reobtaining a model corresponding to the task, that is, indicating the AnLF to reinitiate a model request to reobtain a model that can be used for inference of the task. By reinitiating the model request to the MTLF or another MTLF, the AnLF can obtain a retrained first model or obtain a second model that may be used for inference of the task.

Step A14: After receiving the first information of the MTLF, the AnLF may send fourth information to the consumer NF, where the fourth information indicates that the accuracy of the first model does not meet the accuracy requirement or degrades.

In an implementation, the fourth information includes at least one piece of the following information:
all or part of description information of the task;
information indicating that the accuracy of the first model does not meet the accuracy requirement or degrades;
first accuracy, where the first accuracy indicates the accuracy of the result of inference performed on the task by using the first model;
second recommended operation information; and
second waiting time information, where the second waiting time information indicates time required for the second network element to restore inference of the task, and may be specifically a waiting time for the AnLF to obtain the retrained first model, or a waiting time for the AnLF to obtain the second model that may be used for executing the task.

In an implementation, the second recommended operation information includes at least one of the following operations:
continuing using the inference result data corresponding to the task, that is, indicating that the consumer NF can continue using the obtained inference result data;
stopping using the inference result data corresponding to the task, that is, indicating the consumer NF to stop using the obtained inference result data; and
retriggering the task to obtain new inference result data, that is, indicating the consumer NF to resend the task request message.

Step A15: After receiving the fourth information, the consumer NF may perform at least one of the following operations based on the fourth information:
continuing using the inference result data corresponding to the task, where this operation may be performed in a case that the degrade amplitude of the first accuracy is small and does not exceed a preset amplitude threshold, for example, the second threshold, and in an implementation, if the inference result data corresponding to the task continues to be used, a weight of the inference result data for policy decision-making may be appropriately reduced;
stopping using the inference result data corresponding to the task, where this operation may be performed in a case that the degrade amplitude of the first accuracy is large and exceeds the preset amplitude threshold;
resending the task request information to the second network element, to re-request the second network element to perform inference on the task; and
resending the task request information to a fifth network element, to request the fifth network element to perform inference on the task, where the fifth network element includes a model inference function network element, that is, the consumer NF may send the task request message to another AnLF.

It can be learned from the technical solution in the foregoing embodiment that, in this embodiment of this application, the first accuracy of the first model is determined by the first network element, where the first accuracy indicates the accuracy of the result of inference performed on the task by using the first model. The first information is sent to the second network element in the case where the first network element determines that the first accuracy meets the preset condition, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

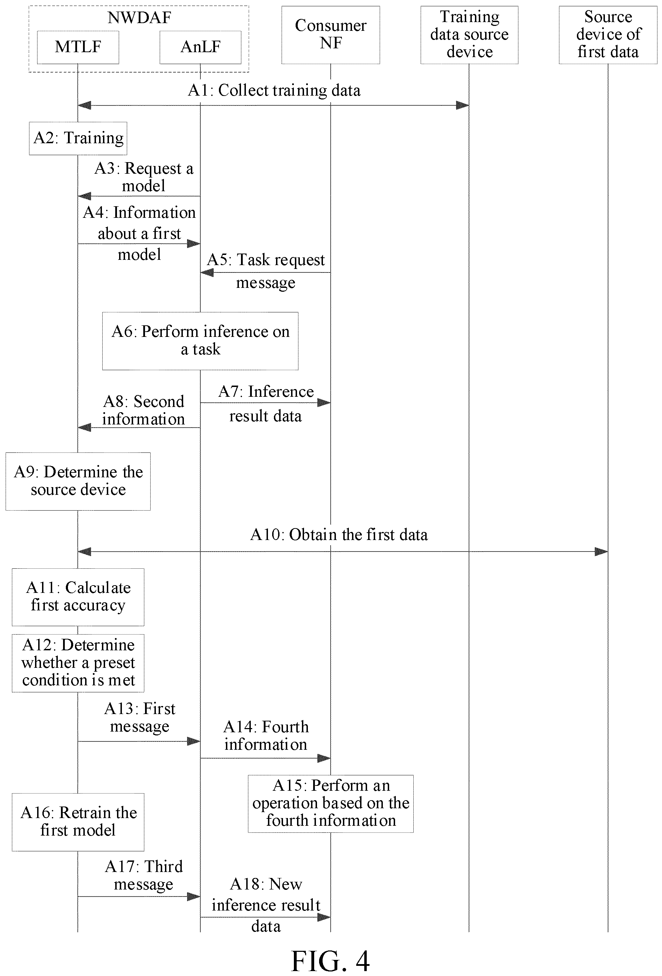

Based on the foregoing embodiments, as shown in FIG. 4, in the case where the first network element determines that the first accuracy meets the preset condition, the method further includes:
step A16: The first network element retrains the first model. A specific training process is basically the same as the training process in step A2, and a specific difference lies in training data.

In an implementation, training data for retraining the first model includes first data of the task, where
the first data includes at least one of the following:
inference input data corresponding to the task;
inference result data corresponding to the task; and
label data corresponding to the task.

Step A17: After the first model is retrained, the first network element sends third information to the second network element, where the third information includes information about a retrained first model, indicates description information of the first model, and may be specifically in a form of a model file, the model, or the like.

In an implementation, the third information further includes at least one of the following:
application condition information of the retrained first model, where the application condition information may include a time range, a region range, a target range, and the like for the first model; and
third accuracy of the retrained first model, that is, an AiT of the retrained first model, where the third accuracy indicates an accuracy of a model output result presented by the retrained first model in the training phase or the test phase.

Step A18: The AnLF performs inference on the task based on the retrained first model to obtain new inference result data of the task, and sends the new inference result data to the consumer NF. In this case, the task for inference may be the task triggered based on the task request message sent by the consumer NF in step A5, or may be the task triggered based on the task request message that is resent by the consumer NF based on the fourth information in step A15.

The new inference result data may carry the identification information of the task, for example, the analytics ID, indicating the specific corresponding task to the consumer NF.

It can be learned from the technical solutions in the foregoing embodiments that, in embodiments of this application, in the case where the first accuracy meets the preset condition, the first network element retrains the first model, and sends the information about the retrained first model to the second network element, so that when the accuracy of the model degrades, corresponding adjustment measures can be taken in time to quickly restore the accuracy of task inference, so as to prevent wrong policy decision-making or an inappropriate operation.

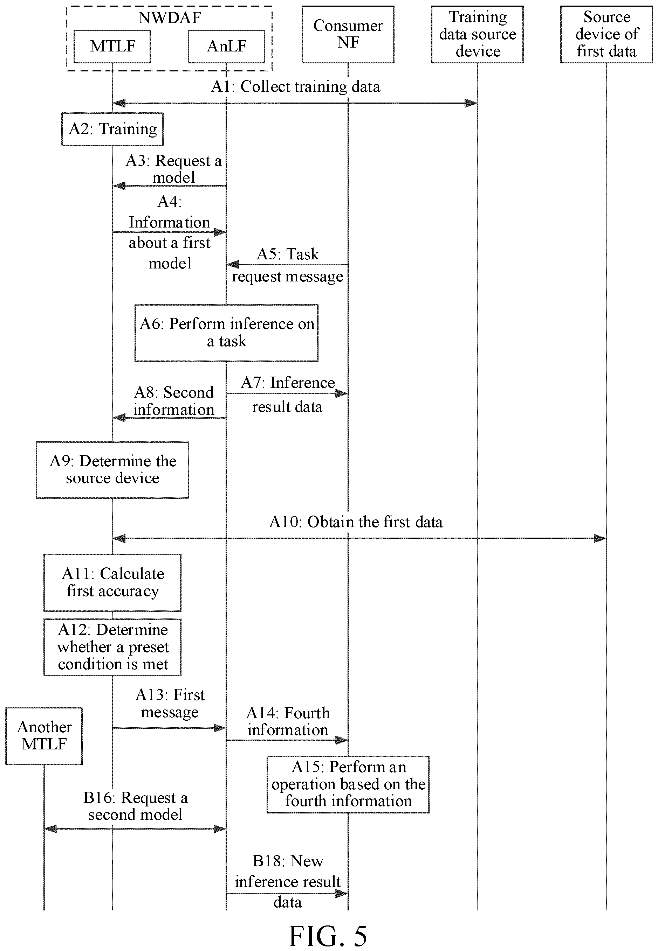

Based on the foregoing embodiments, as shown in FIG. 5, in a case that the first accuracy meets the preset condition, the method further includes:
step B 16: The second network element requests to obtain a second model from a fourth network element, where the second model is a model provided by the fourth network element for the task. For a specific process, refer to steps A4 and A5. The fourth network element includes a model training function network element, that is, the fourth network element may be an MTLF other than the third network element;
step B 18: The second network element performs inference on the task based on the second model to obtain new inference result data of the task, and sends the new result data to the consumer NF. In this case, the task for inference may be the task triggered based on the task request message sent by the consumer NF in step A3, or may be a task triggered based on the task request message that is resent by the consumer NF based on the first information in step A14.

The new inference result data may carry the identification information of the task, for example, the analytics ID, indicating the specific corresponding task to the consumer NF.

It can be learned from the technical solutions in the foregoing embodiments that, in embodiments of this application, in the case where the first accuracy meets the preset condition, the second network element performs inference on the task by using the second model obtained from the fourth network element, to obtain the new inference result data, so that when the accuracy of the model degrades, corresponding adjustment measures can be taken in time to quickly restore the accuracy of task inference, so as to prevent wrong policy decision-making or an inappropriate operation.

In the method for determining model accuracy provided in embodiments of this application, an execution entity may be an apparatus for determining model accuracy. In embodiments of this application, an example in which the apparatus for determining model accuracy performs the method for determining model accuracy is used to describe the apparatus for determining model accuracy provided in an embodiment of this application.

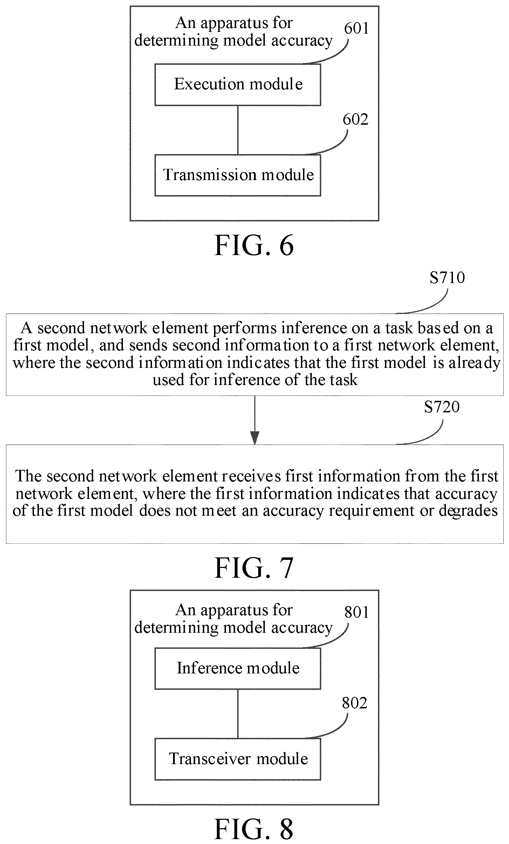

As shown in FIG. 6, the apparatus for determining model accuracy includes: an execution module 601 and a transmission module 602.

The execution module 601 is configured to determine first accuracy of a first model, where the first accuracy indicates an accuracy of a result of inference performed on a task by using the first model. The transmission module 602 is configured to send first information to a second network element in a case that it is determined that the first accuracy meets a preset condition, where the first information indicates that accuracy of the first model does not meet an accuracy requirement or degrades.

The apparatus for determining model accuracy is a network element providing the first model, and the second network element is a network element that performs inference on the task.

Further, the transmission module 602 is configured to obtain first data of the task.

The execution module 601 is configured to calculate the first accuracy of the first model based on the first data.

The first data includes at least one of the following:
inference input data corresponding to the task;
inference result data corresponding to the task; and
label data corresponding to the task.

Further, the transmission module 602 is configured to:
determine a source device of the first data; and
obtain the first data from the source device.

Further, the apparatus for determining model accuracy includes a model training function network element.

Further, the second network element includes a model inference function network element.

It can be learned from the technical solution in the foregoing embodiment that, in this embodiment of this application, the first accuracy of the first model is determined. The first information is sent to the second network element in a case that it is determined that the first accuracy meets a preset condition, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

Based on the foregoing embodiment, further, the transmission module is further configured to receive second information from the second network element, where the second information indicates that the first model is already used for inference of the task.

Further, the second information includes at least one of the following:
identification information of the first model;
identification information of the task;
filter information of the task;
target information of the task;
inference input data corresponding to the task; and
inference result data corresponding to the task.

Further, the source device providing the first data is determined based on at least one piece of the following information:
identification information of the first model;
identification information of the task;
filter information of the task; and
target information of the task.

Further, the transmission module is configured to perform at least one of the following:
obtaining the inference input data corresponding to the task from a first source device, where the first source device is a source device of the inference input data corresponding to the task; and
obtaining the label data corresponding to the task from a second source device, where the second source device is a source device of the label data corresponding to the task.

Further, the preset condition includes at least one of the following conditions:
the first accuracy is less than a first threshold;
the first accuracy is less than second accuracy; and
the first accuracy is less than the second accuracy, and a difference between the first accuracy and the second accuracy is greater than a second threshold, where
the second accuracy indicates an accuracy of a model output result presented by the first model in a training phase or a test phase.

Further, the first information includes at least one piece of the following information:
all or part of description information of the task;
information indicating that the accuracy of the first model does not meet the accuracy requirement or degrades;
the first accuracy;
first recommended operation information; and
first waiting time information, where the first waiting time information indicates time required for retraining the first model.

Further, the first recommended operation information includes at least one of the following operations:
continuing using the first model;
stopping using the first model; and
reobtaining a model corresponding to the task.

It can be learned from the technical solution in the foregoing embodiment that, in this embodiment of this application, the first accuracy of the first model is determined. The first information is sent to the second network element in the case where it is determined that the first accuracy meets a preset condition, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

Based on the foregoing embodiments, in a case that it is determined that the first accuracy meets the preset condition, the execution module is further configured to retrain the first model.

Further, training data for retraining the first model includes first data of the task, where
the first data includes at least one of the following:
inference input data corresponding to the task;
inference result data corresponding to the task; and
label data corresponding to the task.

Further, after the first model is retrained, the transmission module is further configured to send third information to the second network element, where the third information includes information about a retrained first model.

Further, the third information further includes at least one of the following:
application condition information of the retrained first model; and
third accuracy of the retrained first model, where the third accuracy indicates an accuracy of a model output result presented by the retrained first model in a training phase or a test phase.

It can be learned from the technical solution in the foregoing embodiment that, in this embodiment of this application, in the case where the first accuracy meets the preset condition, the first model is retrained, and the information about the retrained first model is sent to the second network element, so that when the accuracy of the model degrades, corresponding adjustment measures can be taken in time to quickly restore the accuracy of task inference, so as to prevent wrong policy decision-making or an inappropriate operation.

In this embodiment of this application, the apparatus for determining model accuracy may be an electronic device, for example, an electronic device having an operating system, or may be a component in the electronic device, for example, an integrated circuit or a chip. The electronic device may be a terminal or a device other than the terminal. For example, the terminal may include but is not limited to the foregoing listed types of the terminal 11, and the another device may be a server, network attached storage (network attached storage, NAS), and the like. This is not specifically limited in this embodiment of this application.

The apparatus for determining model accuracy according to this embodiment of this application can implement all processes implemented in the method embodiments shown in FIG. 2 to FIG. 5, and same technical effects can be achieved. Details are not described herein for brevity.

As shown in FIG. 7, an embodiment of this application provides a method for determining model accuracy. An execution entity of the method includes a second network element. The second network element includes a model inference function network element. In other words, the method may be performed by software or hardware installed on the second network element. The method includes the following steps.

S710: The second network element performs inference on a task based on a first model, and sends second information to a first network element, where the second information indicates that the first model is already used for inference of the task.

S720: The second network element receives first information from the first network element, where the first information indicates that accuracy of the first model does not meet an accuracy requirement or degrades.

Further, the first network element includes a model training function network element.

Further, the second network element includes a model inference function network element.

Further, after receiving the first information from the first network element, the method further includes:
the second network element sends fourth information to a third network element, where the fourth information indicates that the accuracy of the first model does not meet the accuracy requirement or degrades.

Further, the third network element includes a consumer network function.

Further, the second information includes at least one of the following:
identification information of the first model;
identification information of the task;
filter information of the task;
target information of the task;
inference input data corresponding to the task; and
inference result data corresponding to the task.

Further, the first information includes at least one piece of the following information:
all or part of description information of the task;
information indicating that the accuracy of the first model does not meet the accuracy requirement or degrades;
the first accuracy, where the first accuracy indicates an accuracy of a result of inference performed on the task by using the first model;
first recommended operation information; and
first waiting time information, where the first waiting time information indicates time required for retraining the first model.

Further, the first recommended operation information includes at least one of the following:
continuing using the first model;
stopping using the first model; and
reobtaining a model corresponding to the task.

Further, the fourth information includes at least one piece of the following information:
all or part of description information of the task;
information indicating that the accuracy of the first model does not meet the accuracy requirement or degrades;
first accuracy, where the first accuracy indicates an accuracy of a result of inference performed on the task by using the first model;
second recommended operation information; and
second waiting time information, where the second waiting time information indicates time required for the second network element to restore inference of the task.

Further, the second recommended operation information includes at least one of the following operations:
continuing using inference result data corresponding to the task;
stopping using the inference result data corresponding to the task; and
retriggering the task to obtain new inference result data.

Steps S710 and S720 can implement the method embodiments shown in FIG. 2 and FIG. 3, and the same technical effects can be achieved. Repeated details are not described herein again.

It can be learned from the technical solution in the foregoing embodiment that, in this embodiment of this application, the second network element performs inference on the task based on the first model, and sends the second information to the first network element, where the second information indicates that the first model is already used for inference of the task. The second network element receives the first information from the first network element, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

Based on the foregoing embodiments, after receiving the first information from the first network element, the method further includes:
the second network element receives third information from the first network element, where the third information includes information about a retrained first model.

Further, the third information further includes at least one of the following:
application condition information of the retrained first model; and
third accuracy of the retrained first model, where the third accuracy indicates an accuracy of a model output result presented by the retrained first model in a training phase or a test phase.

In this embodiment of this application, the method embodiment shown in FIG. 4 can be implemented, and the same technical effects can be achieved. Repeated details are not described herein again.

It can be learned from the technical solution in the foregoing embodiment that, in this embodiment of this application, in the case where the first accuracy meets the preset condition, the first network element retrains the first model, and sends the information about the retrained first model to the second network element, so that when the accuracy of the model degrades, corresponding adjustment measures can be taken in time to quickly restore the accuracy of task inference, so as to prevent wrong policy decision-making or an inappropriate operation.

Based on the foregoing embodiments, after receiving the first information from the first network element, the method further includes:
the second network element requests to obtain a second model from a fourth network element, where the second model is a model provided by the fourth network element for the task; and
performs inference on the task based on the second model, to obtain new inference result data of the task.

Further, the fourth network element includes a model training function network element.

In this embodiment of this application, the method embodiment shown in FIG. 5 can be implemented, and the same technical effects can be achieved. Repeated details are not described herein again.

It can be learned from the technical solution in the foregoing embodiment that, in this embodiment of this application, in the case where the first accuracy meets the preset condition, the second network element performs inference on the task by using the second model obtained from the fourth network element, to obtain the new inference result data, so that when the accuracy of the model degrades, corresponding adjustment measures can be taken in time to quickly restore the accuracy of task inference, so as to prevent wrong policy decision-making or an inappropriate operation.

In the method for determining model accuracy provided in this embodiment of this application, an execution entity may be an apparatus for determining model accuracy. In embodiments of this application, an example in which the apparatus for determining model accuracy performs the method for determining model accuracy is used to describe the apparatus for determining model accuracy provided in an embodiment of this application.

As shown in FIG. 8, the apparatus for determining model accuracy includes: an inference module 801 and a transceiver module 802.

The inference module 801 is configured to perform inference on a task based on a first model, and send second information to a first network element, where the second information indicates that the first model is already used for inference of the task. The transceiver module 802 is configured to receive first information from the first network element, where the first information indicates that accuracy of the first model does not meet an accuracy requirement or degrades.

Further, the first network element includes a model training function network element.

Further, the apparatus for determining model accuracy includes a model inference function network element.

Further, after receiving the first information from the first network element, the transceiver module 802 is further configured to: send fourth information to a third network element, where the fourth information indicates that the accuracy of the first model does not meet the accuracy requirement or degrades.

Further, the third network element includes a consumer network function.

Further, the second information includes at least one of the following:
identification information of the first model;
identification information of the task;
filter information of the task;
target information of the task;
inference input data corresponding to the task; and
inference result data corresponding to the task.

Further, the first information includes at least one piece of the following information:
all or part of description information of the task;
information indicating that the accuracy of the first model does not meet the accuracy requirement or degrades;
the first accuracy, where the first accuracy indicates an accuracy of a result of inference performed on the task by using the first model;
first recommended operation information; and
first waiting time information, where the first waiting time information indicates time required for retraining the first model.

Further, the first recommended operation information includes at least one of the following:
continuing using the first model;
stopping using the first model; and
reobtaining a model corresponding to the task.

Further, the fourth information includes at least one piece of the following information:
all or part of description information of the task;
information indicating that the accuracy of the first model does not meet the accuracy requirement or degrades;
first accuracy, where the first accuracy indicates an accuracy of a result of inference performed on the task by using the first model;
second recommended operation information; and
second waiting time information, where the second waiting time information indicates time required for the apparatus for determining model accuracy to restore inference of the task.

Further, the second recommended operation information includes at least one of the following operations:
continuing using inference result data corresponding to the task;
stopping using the inference result data corresponding to the task; and
retriggering the task to obtain new inference result data.

It can be learned from the technical solution in the foregoing embodiment that, in this embodiment of this application, inference is performed on the task based on the first model, and the second information is sent to the first network element, where the second information indicates that the first model is already used for inference of the task. The first information is received from the first network element, where the first information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

Based on the foregoing embodiments, after receiving the first information from the first network element, the transceiver module is further configured to: receive third information from the first network element, where the third information includes information about a retrained first model.

Further, the third information further includes at least one of the following:
application condition information of the retrained first model; and
third accuracy of the retrained first model, where the third accuracy indicates an accuracy of a model output result presented by the retrained first model in a training phase or a test phase.

It can be learned from the technical solution in the foregoing embodiment that, in this embodiment of this application, in the case where the first accuracy meets the preset condition, the first network element retrains the first model, and feeds back the information about the retrained first model, so that when the accuracy of the model degrades, corresponding adjustment measures can be taken in time to quickly restore the accuracy of task inference, so as to prevent wrong policy decision-making or an inappropriate operation.

Based on the foregoing embodiments, after receiving the first information from the first network element, the transceiver module is further configured to:
request to obtain a second model from a fourth network element, where the second model is a model provided by the fourth network element for the task; and
perform inference on the task based on the second model, to obtain new inference result data of the task.

Further, the fourth network element includes a model training function network element.

It can be learned from the technical solution in the foregoing embodiment that, in this embodiment of this application, in the case where the first accuracy meets the preset condition, inference on the task is performed by using the second model obtained from the fourth network element, to obtain the new inference result data, so that when the accuracy of the model degrades, corresponding adjustment measures can be taken in time to quickly restore the accuracy of task inference, so as to prevent wrong policy decision-making or an inappropriate operation.

In this embodiment of this application, the apparatus for determining model accuracy may be an electronic device, for example, an electronic device having an operating system, or may be a component in the electronic device, for example, an integrated circuit or a chip. The electronic device may be a terminal or a device other than the terminal. For example, the terminal may include but is not limited to the foregoing listed types of the terminal 11, and the another device may be a server, network attached storage (network attached storage, NAS), and the like. This is not specifically limited in this embodiment of this application.

The apparatus for determining model accuracy according to this embodiment of this application can implement all processes implemented in the method embodiment shown in FIG. 7, and same technical effects can be achieved. Details are not described herein for brevity.

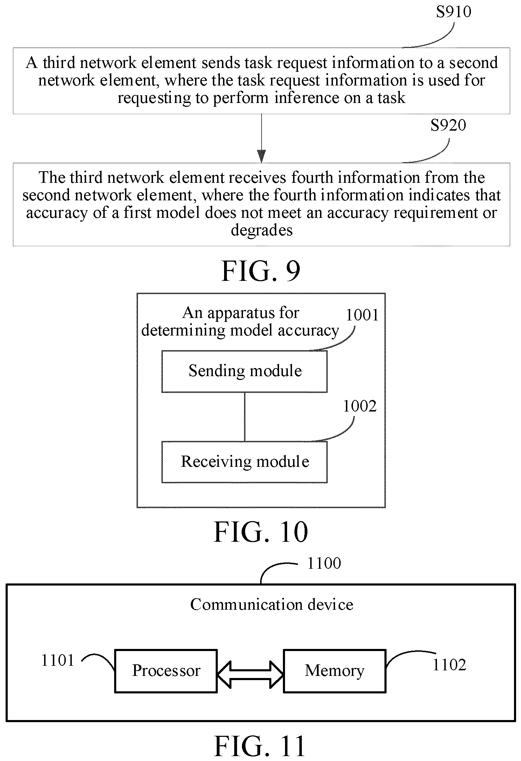

As shown in FIG. 9, an embodiment of this application provides a method for determining model accuracy. An execution entity of the method includes a third network element. The third network element includes a consumer network function. In other words, the method may be performed by software or hardware installed on the third network element. The method includes the following steps.

S910: A third network element sends task request information to a second network element, where the task request information is used for requesting to perform inference on a task.

S920: The third network element receives fourth information from the second network element, where the fourth information indicates that accuracy of a first model does not meet an accuracy requirement or degrades, where
the first model is a model that is provided by a first network element for inference of the task, and the first network element determines that the accuracy of the first model does not meet the accuracy requirement or degrades.

Further, after the receiving fourth information from the second network element, the method further includes:
the third network element performs at least one of the following operations based on the fourth information:
continuing using inference result data corresponding to the task;
stopping using the inference result data corresponding to the task;
resending the task request information to the second network element, to re-request the second network element to perform inference on the task; and
resending the task request information to a fifth network element, to request the fifth network element to perform inference on the task.

Further, the fourth information includes at least one piece of the following information:
part or all of description information of the task;
information indicating that the accuracy of the first model does not meet the accuracy requirement or degrades;
first accuracy, where the first accuracy indicates an accuracy of a result of inference performed on the task by using the first model;
second recommended operation information; and
second waiting time information, where the second waiting time information indicates time required for the first network element to restore inference of the task.

Further, the second recommended operation information includes at least one of the following operations:
continuing using inference result data corresponding to the task;
stopping using the inference result data corresponding to the task; and
retriggering the task to obtain new inference result data.

Further, the first network element includes a model training function network element.

Further, the second network element includes a model inference function network element.

Further, the third network element includes a consumer network function.

Further, the fifth network element includes a model inference function network element.

Steps S910 and S920 can implement the method embodiments shown in FIG. 2 and FIG. 3, and the same technical effects can be achieved. Repeated details are not described herein again.

It can be learned from the technical solution described in the foregoing embodiment that, in this embodiment of this application, the third network element sends the task request information to the second network element, where the task request information is used for requesting to perform inference on the task; and the third network element receives the fourth information from the second network element, where the fourth information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

In the method for determining model accuracy provided in this embodiment of this application, an execution entity may be an apparatus for determining model accuracy. In embodiments of this application, an example in which the apparatus for determining model accuracy performs the method for determining model accuracy is used to describe the apparatus for determining model accuracy provided in an embodiment of this application.

As shown in FIG. 10, the apparatus for determining model accuracy includes a sending module 1001 and a receiving module 1002.

The sending module 1001 is configured to send task request information to a second network element, where the task request information is used for requesting to perform inference on a task; and the receiving module 1002 is configured to receive fourth information from the second network element, where the fourth information indicates that accuracy of a first model does not meet an accuracy requirement or degrades.

The first model is a model that is provided by a first network element for inference of the task, and the first network element determines that the accuracy of the first model does not meet the accuracy requirement or degrades.

Further, after receiving the fourth information from the second network element, the receiving module 1002 is further configured to perform at least one of the following operations based on the fourth information:
continuing using inference result data corresponding to the task;
stopping using the inference result data corresponding to the task;
resending the task request information to the second network element, to re-request the second network element to perform inference on the task; and
resending the task request information to a fifth network element, to request the fifth network element to perform inference on the task.

Further, the fourth information includes at least one piece of the following information:
part or all of description information of the task;
information indicating that the accuracy of the first model does not meet the accuracy requirement or degrades;
first accuracy, where the first accuracy indicates an accuracy of a result of inference performed on the task by using the first model;
second recommended operation information; and
second waiting time information, where the second waiting time information indicates time required for the first network element to restore inference of the task.

Further, the second recommended operation information includes at least one of the following operations:
continuing using inference result data corresponding to the task;
stopping using the inference result data corresponding to the task; and
retriggering the task to obtain new inference result data.

Further, the first network element includes a model training function network element.

Further, the second network element includes a model inference function network element.

Further, the apparatus for determining model accuracy includes a consumer network function.

Further, the fifth network element includes a model inference function network element.

It can be learned from the technical solution described in the foregoing embodiment that, in this embodiment of this application, the task request information is sent to the second network element, where the task request information is used for requesting to perform inference on the task; and the fourth information is received from the second network element, where the fourth information indicates that the accuracy of the first model does not meet the accuracy requirement or degrades, so that the accuracy of the model in an actual application process can be monitored, and when the accuracy degrades, corresponding measures can be taken in time to prevent wrong policy decision-making or an inappropriate operation.

In this embodiment of this application, the apparatus for determining model accuracy may be an electronic device, for example, an electronic device having an operating system, or may be a component in the electronic device, for example, an integrated circuit or a chip. The electronic device may be a terminal or a device other than the terminal. For example, the terminal may include but is not limited to the foregoing listed types of the terminal 11, and the another device may be a server, network attached storage (network attached storage, NAS), and the like. This is not specifically limited in this embodiment of this application.

The apparatus for determining model accuracy according to this embodiment of this application can implement all processes implemented in the method embodiment shown in FIG. 9, and same technical effects can be achieved. Details are not described herein for brevity.

Optionally, as shown in FIG. 11, an embodiment of this application further provides a communication device 1100, including a processor 1101 and a memory 1102. The memory 1102 stores a program or an instruction that can be run on the processor 1101. For example, when the communication device 1100 is a terminal and the program or instruction is executed by the processor 1101, the various steps in embodiments of the method for determining model accuracy are implemented, and the same technical effects can be achieved. When the communication device 1100 is a network-side device, and the program or instruction is executed by the processor 1101, the steps in the embodiments of the method for determining model accuracy are implemented, and the same technical effects can be achieved. To avoid repetition, details are not described herein again.

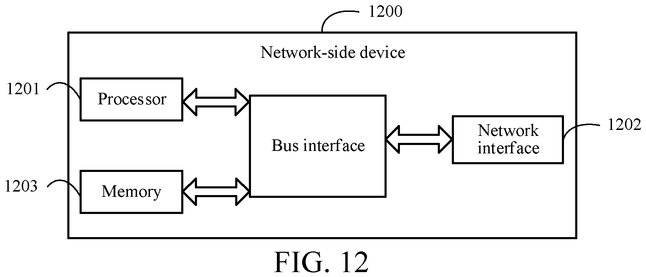

Specifically, an embodiment of this application further provides a network-side device. As shown in FIG. 12, the network-side device 1200 includes: a processor 1201, a network interface 1202, and a memory 1203. The network interface 1202 is, for example, a common public radio interface (a common public radio interface, CPRI).

Specifically, the network-side device 1200 in this embodiment of the present invention further provides: an instruction or a program that is stored in the memory 1203 and that is executable on the processor 1201. The processor 1201 invokes the instruction or program in the memory 1203 to execute the method executed by the modules shown in FIG. 6, FIG. 8, and FIG. 10, and the same technical effects can be achieved. To avoid repetition, details are not described herein again.

An embodiment of this application further provides a readable storage medium. The readable storage medium stores a program or an instruction. When the program or the instruction is executed by a processor, the processes of the foregoing method embodiments for determining model accuracy are implemented, and the same technical effects are achieved. To avoid repetition, details are not described herein again.

The processor is the processor in the terminal in the foregoing embodiments. The readable storage medium includes a computer-readable storage medium, for example, a computer read only memory ROM, a random-access memory RAM, a magnetic disk, an optical disk, and the like.

An embodiment of this application further provides a chip. The chip includes a processor and a communication interface. The communication interface and the processor are coupled. The processor is configured to run a program or an instruction, so that the processes of the foregoing model accuracy determining method embodiments are implemented and the same technical effects are achieved. To avoid repetition, details are not described herein again.

It should be understood that the chip mentioned in this embodiment of this application may also be referred to as system on chip, system-on-chip, System on Chip, SoC, or the like.

An embodiment of this application further provides a computer program/program product. The computer program/program product is stored in a storage medium. The computer program/program product is executed by at least one processor, so that the processes of the foregoing model accuracy determining method embodiments are implemented and the same technical effects are achieved. To avoid repetition, details are not described herein again.

An embodiment of this application further provides a system for determining model accuracy, including: a network-side device, where the network-side device includes a first network element, a second network element, and a third network element, the first network element may be configured to perform the operations of the method for determining model accuracy as described above, the second network element may be configured to perform the operations of the method for determining model accuracy as described above, and the third network element may be configured to perform the operations of the model accuracy determining method as described above.

It should be noted that in this specification, the terms "include", "comprise", and any variation thereof are intended to cover a non-exclusive inclusion. Therefore, a process, a method, a target, or an apparatus that includes a series of elements not only includes such elements, but also includes other elements not specified expressly, or may include inherent elements of the process, the method, the target, or the apparatus. Without more limitations, an element defined by the phrase "including one" does not exclude a case in which there are still other same elements in a process, a method, a target, or an apparatus including the element. Further, it should be noted that the scope of the method and apparatus in embodiments of this application is not limited to the shown or discussed orders in which the functions are implemented. Alternatively, depending on the functions, the functions maybe performed in a substantially simultaneous manner or in a reverse order. For example, the described method may be performed in an order different from the described order, and various steps may be added, omitted, or combined. In addition, features described with reference to some examples may be combined in other examples.

According to the descriptions in the foregoing implementations, a person skilled in the art may clearly learn that the method according to the foregoing embodiments may be implemented by relying on software and a necessary common hardware platform or by using hardware. However, in most cases, the former is more preferred. Based on such an understanding, the technical solutions of this application essentially, or the part contributing to the conventional technology, may be presented in a form of a computer software product. The computer software product is stored in a storage medium (for example, a read only memory (read only memory, ROM)/random-access memory (random-access memory, RAM), a magnetic disk, or an optical disc), including several instructions to enable a terminal (which may be a mobile phone, a computer, a server, an air conditioner, a network device, or the like) to perform the methods described in embodiments of this application.

Embodiments of this application are described above with reference to the accompanying drawings. This application is not limited to the embodiments described above, and the embodiments described above are merely examples but not limitations. A person of ordinary skill in the art may make various variations under the teaching of this application without departing from the purpose of this application and the protection scope of the claims, and such variations shall all fall within the protection scope of this application.

## Claims

1. A method for determining model accuracy, comprising:
determining, by a first network element, first accuracy of a first model, wherein the first accuracy indicates an accuracy of a result of inference performed on a task by using the first model; and
sending first information to a second network element in a case that the first network element determines that the first accuracy meets a preset condition, wherein the first information indicates that accuracy of the first model does not meet an accuracy requirement or degrades, wherein
the first network element is a network element providing the first model, and the second network element is a network element that performs inference on the task.

2. The method according to claim 1, wherein before the determining, by a first network element, first accuracy of a first model, the method further comprises:
receiving, by the first network element, second information from the second network element, wherein the second information indicates that the first model is already used for inference of the task.

3. The method according to claim 2, wherein the second information comprises at least one of the following:
identification information of the first model;
identification information of the task;
filter information of the task;
target information of the task;
inference input data corresponding to the task; and
inference result data corresponding to the task.

4. The method according to claim 1, wherein the determining, by a first network element, first accuracy of a first model comprises:
obtaining, by the first network element, first data of the task; and
calculating, by the first network element, the first accuracy of the first model based on the first data, wherein
the first data comprises at least one of the following:
inference input data corresponding to the task;
inference result data corresponding to the task; and
label data corresponding to the task.

5. The method according to claim 4, wherein the obtaining, by the first network element, first data of the task comprises:
determining, by the first network element, a source device of the first data; and
obtaining, by the first network element, the first data from the source device.

6. The method according to claim 5, wherein the source device providing the first data is determined based on at least one piece of the following information:
identification information of the first model;
identification information of the task;
filter information of the task; and
target information of the task.

7. The method according to claim 6, wherein the obtaining, by the first network element, the first data from the source device comprises performing at least one of the following:
obtaining, by the first network element, the inference input data corresponding to the task from a first source device, wherein the first source device is a source device of the inference input data corresponding to the task; and
obtaining, by the first network element, the label data corresponding to the task from a second source device, wherein the second source device is a source device of the label data corresponding to the task.

8. The method according to claim 1, wherein the preset condition comprises at least one of the following conditions:
the first accuracy is less than a first threshold;
the first accuracy is less than second accuracy; and
the first accuracy is less than the second accuracy, and a difference between the first accuracy and the second accuracy is greater than a second threshold, wherein
the second accuracy indicates an accuracy of a model output result presented by the first model in a training phase or a test phase.

9. The method according to claim 1, wherein the first information comprises at least one piece of the following information:
all or part of description information of the task;
information indicating that the accuracy of the first model does not meet the accuracy requirement or degrades;
the first accuracy;
first recommended operation information; and
first waiting time information, wherein the first waiting time information indicates time required for retraining the first model.

10. The method according to claim 9, wherein the first recommended operation information comprises at least one of the following operations:
continuing using the first model;
stopping using the first model; and
reobtaining a model corresponding to the task.

11. The method according to claim 1, wherein in the case that the first network element determines that the first accuracy meets the preset condition, the method further comprises:
retraining, by the first network element, the first model.

12. The method according to claim 11, wherein training data for retraining the first model comprises first data of the task, wherein
the first data comprises at least one of the following:
inference input data corresponding to the task;
inference result data corresponding to the task; and
label data corresponding to the task.

13. The method according to claim 11 or 12, wherein after the retraining the first model, the method further comprises:
sending, by the first network element, third information to the second network element, wherein the third information comprises information about a retrained first model.

14. The method according to claim 13, wherein the third information further comprises at least one of the following:
application condition information of the retrained first model; and
third accuracy of the retrained first model, wherein the third accuracy indicates an accuracy of a model output result presented by the retrained first model in a training phase or a test phase.

15. The method according to claim 1, wherein the first network element comprises a model training function network element.

16. The method according to claim 1, wherein the second network element comprises a model inference function network element.

17. An apparatus for determining model accuracy, comprising:
an execution module, configured to determine first accuracy of a first model, wherein the first accuracy indicates an accuracy of a result of inference performed on a task by using the first model; and
a transmission module, configured to send first information to a second network element in a case that it is determined that the first accuracy meets a preset condition, wherein the first information indicates that accuracy of the first model does not meet an accuracy requirement or degrades, wherein
the apparatus for determining model accuracy is a network element providing the first model, and the second network element is a network element that performs inference on the task.

18. A method for determining model accuracy is provided, comprising:
performing, by a second network element, inference on a task based on a first model, and sending second information to a first network element, wherein the second information indicates that the first model is already used for inference of the task; and
receiving, by the second network element, first information from the first network element, wherein the first information indicates that accuracy of the first model does not meet an accuracy requirement or degrades.

19. The method according to claim 18, wherein after the receiving first information from the first network element, the method further comprises:
sending, by the second network element, fourth information to a third network element, wherein the fourth information indicates that the accuracy of the first model does not meet the accuracy requirement or degrades.

20. The method according to claim 18, wherein the second information comprises at least one of the following:
identification information of the first model;
identification information of the task;
filter information of the task;
target information of the task;
inference input data corresponding to the task; and
inference result data corresponding to the task.

21. The method according to claim 18, wherein the first information comprises at least one piece of the following information:
all or part of description information of the task;
information indicating that the accuracy of the first model does not meet the accuracy requirement or degrades;
first accuracy, wherein the first accuracy indicates an accuracy of a result of inference performed on the task by using the first model;
first recommended operation information; and
first waiting time information, wherein the first waiting time information indicates time required for retraining the first model.

22. The method according to claim 21, wherein the first recommended operation information comprises at least one of the following:
continuing using the first model;
stopping using the first model; and
reobtaining a model corresponding to the task.

23. The method according to claim 19, wherein the fourth information comprises at least one piece of the following information:
all or part of description information of the task;
information indicating that the accuracy of the first model does not meet the accuracy requirement or degrades;
first accuracy, wherein the first accuracy indicates an accuracy of a result of inference performed on the task by using the first model;
second recommended operation information; and
second waiting time information, wherein the second waiting time information indicates time required for the second network element to restore inference of the task.

24. The method according to claim 23, wherein the second recommended operation information comprises at least one of the following operations:
continuing using inference result data corresponding to the task;
stopping using the inference result data corresponding to the task; and
retriggering the task to obtain new inference result data.

25. The method according to claim 18, wherein after the receiving first information from the first network element, the method further comprises:
receiving, by the second network element, third information from the first network element, wherein the third information comprises information about a retrained first model.

26. The method according to claim 25, wherein the third information further comprises at least one of the following:
application condition information of the retrained first model; and
third accuracy of the retrained first model, wherein the third accuracy indicates an accuracy of a model output result presented by the retrained first model in a training phase or a test phase.

27. The method according to claim 18, wherein after the receiving first information from the first network element, the method further comprises:
requesting, by the second network element, to obtain a second model from a fourth network element, wherein the second model is a model provided by the fourth network element for the task; and
performing inference on the task based on the second model, to obtain new inference result data of the task.

28. The method according to claim 18, wherein the first network element comprises a model training function network element.

29. The method according to claim 18, wherein the second network element comprises a model inference function network element.

30. The method according to claim 19, wherein the third network element comprises a consumer network function.

31. The method according to claim 27, wherein the fourth network element comprises a model training function network element.

32. An apparatus for determining model accuracy, comprising:
an inference module, configured to perform inference on a task based on a first model, and send second information to a first network element, wherein the second information indicates that the first model is already used for inference of the task; and
a transceiver module, configured to receive first information from the first network element, wherein the first information indicates that accuracy of the first model does not meet an accuracy requirement or degrades.

33. A method for determining model accuracy, comprising:
sending, by a third network element, task request information to a second network element, wherein the task request information is used for requesting to perform inference on a task; and
receiving, by the third network element, fourth information from the second network element, wherein the fourth information indicates that accuracy of a first model does not meet an accuracy requirement or degrades; and
the first model is a model that is provided by a first network element for inference of the task, and the first network element determines that the accuracy of the first model does not meet the accuracy requirement or degrades.

34. The method according to claim 33, wherein after the receiving fourth information from the second network element, the method further comprises:
performing, by the third network element, at least one of the following operations based on the fourth information:
continuing using inference result data corresponding to the task;
stopping using the inference result data corresponding to the task;
resending the task request information to the second network element, to re-request the second network element to perform inference on the task; and
resending the task request information to a fifth network element, to request the fifth network element to perform inference on the task.

35. The method according to claim 33, wherein the fourth information comprises at least one piece of the following information:
part or all of description information of the task;
information indicating that the accuracy of the first model does not meet the accuracy requirement or degrades;
first accuracy, wherein the first accuracy indicates an accuracy of a result of inference performed on the task by using the first model;
second recommended operation information; and
second waiting time information, wherein the second waiting time information indicates time required for the first network element to restore inference of the task.

36. The method according to claim 35, wherein the second recommended operation information comprises at least one of the following operations:
continuing using inference result data corresponding to the task;
stopping using the inference result data corresponding to the task; and
retriggering the task to obtain new inference result data.

37. The method according to claim 33, wherein the first network element comprises a model training function network element.

38. The method according to claim 33, wherein the second network element comprises a model inference function network element.

39. The method according to claim 33, wherein the third network element comprises a consumer network function.

40. The method according to claim 34, wherein the fifth network element comprises a model inference function network element.

41. An apparatus for determining model accuracy, comprising:
a sending module, configured to send task request information to a second network element, wherein the task request information is used for requesting to perform inference on a task; and
a receiving module, configured to receive fourth information from the second network element, wherein the fourth information indicates that accuracy of a first model does not meet an accuracy requirement or degrades, wherein
the first model is a model that is provided by a first network element for inference of the task, and the first network element determines that the accuracy of the first model does not meet the accuracy requirement or degrades.

42. A network-side device, comprising a processor and a memory, wherein the memory stores a program or instructions that can be run on the processor, and when the program is or the instructions are executed by the processor, the steps of the method for determining model accuracy according to any one of claims 1 to 16 are implemented, or the steps of the method for determining model accuracy according to any one of claims 18 to 31 are implemented, or the steps of the method for determining model accuracy according to any one of claims 33 to 41 are implemented.

43. A readable storage medium, wherein the readable storage medium stores a program or instructions, and when the program is or the instructions are executed by a processor, the steps of the method for determining model accuracy according to any one of claims 1 to 16 are implemented, or the steps of the method for determining model accuracy according to any one of claims 18 to 31 are implemented, or the steps of the method for determining model accuracy according to any one of claims 33 to 41 are implemented.
